# FASCICULE DE BREVET EUROPEEN

(11) **EP 3 825 684 B1**
(45) Date de publication et mention de la délivrance du brevet: **12.03.2025**
(21) Numéro de dépôt: 20153826.1
(22) Date de dépôt: 27.01.2020
(51) Int. Cl.: G01N 29/14, C23C 2/20, G01N 29/22, G01N 29/27, G01N 29/44

(54) **SYSTÈME D'ESSORAGE D'UN REVÊTEMENT DE MÉTAL LIQUIDE SUR UNE BANDE MÉTALLIQUE EN DÉFILEMENT**
TROCKNUNGSSYSTEM EINER FLÜSSIGMETALLBESCHICHTUNG AUF EINEM LAUFENDEN METALLBAND
SYSTEM FOR WATER REMOVAL FROM A LIQUID METAL COATING ON A TRAVELLING METAL BAND

(30) Priorité: 25.11.2019 EP 19290115
(43) Date de publication de la demande: 26.05.2021
(73) Titulaire: CLECIM SAS, 42600 Savigneux Cedex (FR)
(72) Inventeur: NASSERIAN, Afchine, 42600 Savigneux (FR); GOUTTEBROZE, Stéphane, 42600 Savigneux (FR); GRENIER, Benjamin, 42600 Savigneux (FR)

(56) Documents cités:
- JP-A- 2003 321 757
- JP-A- 2007 308 778
- JP-A- 2011 102 408

## Description

La présente invention concerne un système d'essorage d'un revêtement de métal liquide sur une bande métallique en défilement selon le préambule de la revendication 1.

Dans le domaine du revêtement de métal liquide sur une bande métallique en défilement continu, un système d'essorage du dit revêtement est disposé en aval d'un bain de revêtement comprenant le métal liquide et dans lequel est plongée la bande qui en ressort - généralement verticalement - revêtue avant d'entrer dans le système d'essorage. De tels systèmes d'essorage sont bien connus pour des applications de galvanisation de bande métallique.

Principalement un tel système d'essorage comprend au moins deux lames d'air exerçant respectivement sous forme de flux de gaz un profil de pression sur une largeur de chacune des faces de ladite bande. Le but majeur d'un tel essorage est de pouvoir assurer un dépôt uniforme du revêtement sur chaque face de bande, en fonction de l'épaisseur souhaitée de revêtement en sortie de bande des lames d'air.

Durant cette phase d'essorage, il arrive que des gouttes ou autres impuretés de métal liquide viennent polluer la surface des faces de bande principalement par-dessous les lames d'air et forment ainsi des défauts qualitatifs de revêtement en sortie de bande des lames d'air. De tels gouttes ou impuretés polluant la surface de bande sont connus sous le nom de « splash ». Afin de pouvoir atténuer cette pollution de surface de bande ou splash, plusieurs états de la technique, par exemple JP2007308778A, JP2011102408A, JP2011032526A, proposent une méthode de mesure acoustique d'un système d'essorage fondée sur une analyse fréquentielle d'un signal acoustique à proximité du système s'essorage. Il est ainsi possible de calculer un spectre qui peut ainsi présenter une caractéristique de présence de splash d'intensité variable sous une bande fréquentielle spécifique. Afin de s'assurer que ces effets de splash sont réduits, il est donc procédé à un réajustement de paramètres des lames d'air qui a pour but de minimiser l'intensité de la bande fréquentielle lié aux splash. Par exemple, en fonction d'un profil d'ouverture de section de sortie de lame d'air bien prédéterminé (en offline, c'est-à-dire avant que la bande ne soit mis en défilement actif), les paramètres à réajuster sont une pression d'air à la surface de bande, une distance entre les lames d'air et la bande, un angle de lame d'air par rapport à l'horizontale et une distance entre les lames d'air et le bain de métal liquide.

D'autres développements ont depuis lors eu lieu révélant d'autres problématiques qui ne se fondent plus sur une pollution de surface de bande par ces effets de splash, mais sur d'autres artefacts certes provoquant une dégradation de qualité du revêtement final, mais qui semblaient liés à une pollution du système d'essorage et son environnement.

Un premier but de la présente invention est ainsi de proposer un système d'essorage d'un revêtement de métal liquide sur une bande métallique en défilement comprenant deux lames d'air ayant une gamme plus performante de détection acoustique d'irrégularité que celle décrite dans l'état de l'art.

En effet, des facteurs particuliers sont à considérer d'un point de vue des bandes en concomitance avec un système d'essorage. Les bandes défilent en continu (soudées entre elles par tête et queue de bandes) et possèdent des largeurs variables selon les produits à revêtir. De plus, les nouvelles lames d'air peuvent aussi avoir une sortie à section variable lors du défilement de la bande, la bande ayant aussi usuellement ses bords encadrés par des déflecteurs d'air (dits « baffles ») pour éviter des collisions de flux des lames d'air. A partir de tous ces facteurs, il a été remarqué que des perturbations de flux se produisaient à proximité de la sortie de la lame d'air, engendrant par exemple une pollution ou une altération de type obstructrice au moins partielle dans la largeur du flux à proximité de la sortie d'air de la lame d'air. A l'aide de plusieurs essais expérimentaux, il a été montré qu'il était possible de détecter au moyen d'une analyse acoustique une signature acoustique bien spécifique liée à un effet d'obturation altérant le flux de gaz en section de sortie de lame d'air.

Par ailleurs, il a aussi été montré que ces effets d'altération du flux de gaz en section de sortie de lame d'air étaient accrus si les déflecteurs d'air aux bords de bande n'étaient pas optimalement disposés. En particulier, un écart trop important entre un déflecteur et un bord de bande a pour effet d'augmenter des effets de reflux de pollution vers la lame d'air (à l'inverse des effets splash uniquement vers la bande comme décrit dans l'état de l'art).

Enfin, en fonction de l'inclinaison de la lame d'air (et de la direction principale de son flux) par rapport à l'horizontale, des effets de flux de pression de la lame d'air vers le bain sous-jacent et de reflux de pollution ont pu être mis en évidence. Ceux-ci peuvent malencontreusement mener à encore venir contribuer à une altération voire une obstruction partielle du flux de gaz en section de sortie de lame d'air.

Un second but de la présente invention est de proposer un système d'essorage mieux contrôlé pour prévenir d'effets de pollution ou d'obturation au niveau de la sortie des lames d'air.

Enfin, un troisième but de la présente invention est de proposer un moyen optimal pour résorber ces effets parasitaires, en particulier idéalement sans devoir arrêter la bande en défilement.

Dans ces perspectives, un système d'essorage est proposé au travers des caractéristiques de la revendication 1.

Un ensemble de sous-revendications présente également des avantages de l'invention.

A partir d'un système d'essorage d'un revêtement de métal liquide sur une bande métallique en défilement vertical comprenant :
- au moins deux lames d'air exerçant respectivement sous forme de flux de gaz un profil de pression sur une largeur de chacune des faces de ladite bande,
- un moyen de mesure acoustique dédié à enregistrer des ondes provenant du système d'essorage,
- un moyen d'analyse acoustique couplé au moyen de mesure acoustique,
la présente invention prévoit que le moyen d'analyse acoustique est configuré pour discerner au moins une signature acoustique provenant d'une irrégularité fonctionnelle du système d'essorage liée à au moins un élément obstructeur altérant le flux en section de sortie de lame d'air.

En effet, après expérimentations, il a été possible de mesurer soit par des mesures différentielles de signaux acoustiques (du système d'essorage propre puis du système en fonction) ou par une méthode fréquentielle de ces signaux acoustiques de détecter via les moyens de mesure et d'analyse acoustique l'intensité et/ou la bande de fréquence d'un effet obstructeur. De la sorte, il est fort avantageusement en particulier de détecter un dépassement de cette intensité au-delà d'un seuil non tolérable qui amènerait à ne plus pouvoir garantir une qualité prédéfinie du revêtement final de la bande. Enfin, par reconnaissance de propres signatures acoustiques des divers éléments tel que les deux lames d'air et deux déflecteurs d'air en bord de bande, et par reconnaissance d'une de leurs composantes acoustiques provenant d'une irrégularité fonctionnelle du système d'essorage liée à au moins un élément obstructeur, il est enfin possible de mieux localiser ladite obstruction ou son origine. Aussi, la gamme de détection acoustique d'irrégularité fonctionnelle du système d'essorage a été rendue plus performante.

En particulier, le système d'essorage selon l'invention peut ainsi donc être rendu plus robuste au niveau de la sortie de lame d'air contre des éléments obstructeurs compris parmi au moins un des éléments suivants : une pollution poussiéreuse, une éclaboussure de métal liquide, un composé d'impureté solide tel que de type dross, un outil de nettoyage de la section de sortie de lame d'air (comme un couteau translaté dans la fente de sortie de lame d'air pour la nettoyer) ou une pollution quelconque issue d' une alimentation de soufflage de la lame d'air.

Comme précédemment mentionné, le système d'essorage comprend généralement des déflecteurs d'air qui sont disposés de part et d'autre de chaque bord de bande sous un écart latéral, idéalement ajustable, généralement supérieur à 0,1mm en mode de défilement continu de la bande à essorer. Ces déflecteurs ont une première fonction qui est de diminuer le bruit causé par la collision des flux de gaz des deux lames d'air hors des bords de bande. En effet, ce bruit est particulièrement gênant pour l'oreille humaine. Les déflecteurs d'air peuvent aussi avoir une fonction aéraulique de sorte que le flux des lames d'air en bord de bande soit dirigé de sorte que le profil de pression sur la largeur de bande et ses bords soit bien maitrisé pour garantir un revêtement uniforme sur toute la largeur (= sans effets de bords par exemple pour éviter des variations d'épaisseurs de revêtement en bord de bande par rapport au centre de bande). Enfin, en fonction des écarts choisis pour un fonctionnement optimal des déflecteurs, il peut s'avérer que l'écart soit suffisamment grand pour provoquer des flux ou reflux d'une source de pollution vers la lame d'air. Ici encore, le système d'essorage selon l'invention prévoit avantageusement que le moyen d'analyse acoustique permet de discerner une signature acoustique provenant d'une irrégularité fonctionnelle du système d'essorage liée à un dépassement au-delà d'un seuil prédéfini du dit écart, avantageusement compris entre 0.1mm et 50mm, afin de garantir un niveau de pollution minimal.

Le système d'essorage peut prévoit également que le moyen d'analyse acoustique permet de discerner une signature acoustique de l'irrégularité fonctionnelle du système d'essorage liée à une modification de flux de gaz par rapport à une signature acoustique de référence liée à une géométrie d'ouverture de sortie de lame d'air à section variable transversalement et/ou verticalement, particulièrement sous forme d'au moins une lèvre à ouverture verticale variable selon la largeur de la lame d'air. Additionnellement, il est possible que la géométrie d'ouverture, à section variable transversalement et/ou verticalement, soit dynamiquement modifiée sous un mode actif de défilement continu de bande.

Toutes ces mesures et analyses acoustiques étant faites en continu et simultanément pour les diverses irrégularités fonctionnelles précitées du système d'essorage, il est ainsi avantageusement possible de mieux contrôler ledit système pour prévenir d'effets de pollution ou d'obturation au niveau de la sortie des lames d'air, même si des modifications dynamiques de positionnement (lame d'air, déflecteurs...), dimensionnement (section variable de sortie de lame d'air, format variable de bandes) se produisent.

Analogiquement aux solutions et avantages précités, des expérimentations supplémentaires ont permis d'étendre la gamme de détection acoustique du système d'essorage selon l'invention en ce qu'il prévoit de plus que le moyen d'analyse acoustique permet de discerner une signature acoustique de l'irrégularité fonctionnelle du système d'essorage liée à au moins une des causes suivantes :
- une résonance vibratoire parasite de la bande ou d'un déflecteur d'air latéral à la bande,
- un défaut qualitatif intrinsèque de bande ou de son revêtement, en particulier un défaut périodique,
- une forme de bande ayant au moins une portion transversale oblique, concave ou convexe,
- un décentrage transversal de la bande entre les deux lames d'air,
- un dépassement d'un seuil prédéfini de bruit de fond du système d'essorage,
- un désalignement vertical des ouvertures en section de sortie des deux lames d'air,
- un défaut de moyen de soufflage dans les lames d'air,
- (corrde contrôle de déflection d'air en bord de bande.

Des exemples de réalisation et d'application sont fournis à l'aide de figures décrites :
- Figure 1: exemple de mode de réalisation d'un système d'essorage selon l'invention,
- Figure 2: exemple d'effets altérant la section de sortie de lame d'air.

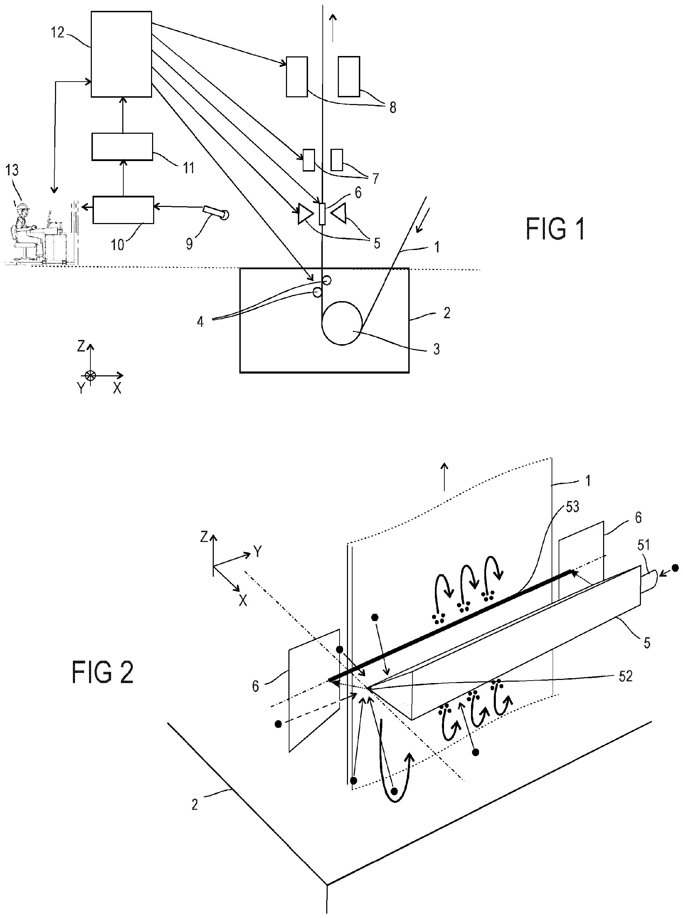

Figure 1 présente un exemple de mode de réalisation d'un système d'essorage selon l'invention, le dit système étant prévu pour un essorage d'un revêtement de métal liquide dans un bain (2) sur une bande métallique (1), ladite bande plongeant dans le dit bain et ressortant revêtue du bain en défilement vertical (Z). Dans le bain, la bande défile usuellement sur un rouleau de fond (3) puis entre deux rouleaux (correcteur, stabilisateur) avant la sortie de bain.

En sortie de bain, la bande passe ensuite entre deux lames d'air (5) et de déflecteur latéraux (6) afin d'essorer le revêtement encore liquide, puis si nécessaire au travers d'un dispositif de stabilisation (7) de bande (par exemple de type électromagnétique) et enfin au travers de refroidisseur (8) (par exemple par soufflage).

Le système d'essorage selon l'invention comprend ainsi :
- au moins les deux lames d'air (5) exerçant respectivement sous forme de flux de gaz un profil de pression sur une largeur de chacune des faces de ladite bande,
- un moyen de mesure acoustique (9) dédié à enregistrer des ondes provenant du système d'essorage,
- un moyen d'analyse acoustique (10) couplé au moyen de mesure acoustique, et permettant de discerner au moins une signature acoustique provenant d'une irrégularité fonctionnelle du système d'essorage liée à au moins un élément obstructeur altérant le flux en section de sortie de lame d'air (5).

Un opérateur (13) de l'installation de revêtement décrite ci-dessus peut recevoir des informations du moyen d'analyse acoustique afin de contrôler en temps réel visuellement des apparitions de signature acoustique provenant d'irrégularités fonctionnelles du système d'essorage, en particulier sous forme d'alarmes lors du défilement de la bande.

Le moyen de mesure acoustique (9) se compose d'au moins un capteur de pression acoustique situé d'une part ou d'autre des bords de bande. Il peut aussi se composer de plusieurs capteurs de pression acoustique disposés parallèlement à la lame d'air, idéalement au moins au nombre de 2, 3 ou 4, afin des fins de redondance de signaux mesurés ou de localisation plus fine des sources d'irrégularités fonctionnelles détectées.

Le moyen d'analyse acoustique délivre (automatiquement) au moins une alarme à une unité de contrôle (11) (et/ou à l'opérateur (13)), en particulier sous forme d'alarme pour déclencher une action (automatique ou manuelle) de nettoyage de la section de sortie de lame d'air, idéalement par un outil (couteau, brosse, etc.) manuel ou automatisé. Idéalement, une telle action de nettoyage est déclenchée sous une très brève durée lors d'un passage détectable d'une queue et d'une tête de deux bandes soudées pour ne pas impacter d'autre partie de bande vierge. L'outil doit être déplacé en section de sortie de lame d'air suffisamment rapidement afin de ne provoquer qu'une altération du profil de pression dans des tolérances exigées pour une qualité de revêtement prédéfinie.

De plus, il est possible d'exécuter une action de nettoyage (automatique ou manuelle) de la surface du bain à partir de l'alarme émise afin de réduire la quantité de dross y siégeant et donc de limiter la pollution des dites dross vers la lame d'air (et vers la bande).

L'unité de contrôle (11) est couplée à au moins un module de régulation (12), chacun des dits modules de régulation étant couplés à des équipements agissant en particulier sur les lames d'air (5) et/ou des déflecteurs latéraux (6) à la bande, et en particulier agissant sur des dispositifs disposés en aval ou en amont du système d'essorage tels qu'un stabilisateur de bande (7), des moyens de refroidissement (8) ou des moyens d'entrainement de bande (3, 4).

Chaque module de régulation du profil de pression comprend une fenêtre de paramètres autorisés de fonctionnement du système d'essorage, les dits paramètres étant adaptés au format, au type et/ou à une vitesse de défilement de bande et de revêtement et aux équipements régulés du dit système d'essorage. En cas de fonctionnement du système d'essorage hors d'une fenêtre de paramètres autorisés de fonctionnement, une alarme d'alerte pour une action (manuelle ou automatique) de maintenance est déclenchée. Enfin, des paramètres préférentiels de fonctionnement du système d'essorage aptes à minimiser des irrégularités fonctionnelles sont la pression du flux de gaz, la distance entre lame d'air et bande, l'inclinaison du flux de gaz par rapport à l'horizontale, la hauteur du système d'essorage par rapport à un bain de métal liquide sous-jacent, un dimensionnement de la section d'ouverture en sortie des lames d'air. Un algorithme mémorisé et exécutable dans le module de contrôle permet d'ajuster automatiquement les dits paramètres pour les recadrer dans leur fenêtre de paramètres autorisés. L'opérateur peut toutefois prendre la main sur le module de contrôle et ordonner directement des instructions spécifiques au(x) module(s) de régulation (12).

Sachant que les bandes métalliques et leurs revêtements ont des propriétés différentes au sein même d'une telle installation de revêtement et sachant que les propriétés même des types de bande et revêtement évoluent sans cesse avec les progrès de la métallurgie, il aussi prévu que le moyen d'analyse acoustique peut être avantageusement couplée à une unité d'apprentissage automatique, tel qu'un réseau neuronal. De la sorte, il peut ainsi détecter plus intelligemment des déviations de signatures acoustiques par rapport à celles qu'il a déjà analysées.

Figure 2 présente une vue en perspective d'un exemple d'effets altérant la section de sortie (52) de lame d'air (5) et donnant lieu à des ondes acoustiques détectables sous forme de signature acoustique provenant d'une irrégularité fonctionnelle du système d'essorage liée à au moins un élément obstructeur altérant le flux en section de sortie de lame d'air générant le profil de pression (53) sur la bande (1). Des sources de pollution diverses (poussières, impuretés, dross, etc.) de nature finalement obstruante ont été représentées par des points noirs suivis par une flèche indiquant de leur cheminement. De potentiels cheminements divers et variés sont ainsi illustrés fondés sur :
- des flux et reflux de nuages de pollution au-dessous et au-dessous de la lame d'air,
- une arrivée de pollution dans la partie d'alimentation (51) en gaz de la lame d'air,
- des reprojections de dross depuis le bain (2) vers la lame d'air (par exemple si la lame d'air est proche du bain),
- des flux parasites de pollution issus de turbulences entre les déflecteurs et les bords de bande,
- des décrochages d'impuretés depuis la bande ou depuis les déflecteurs (6) latéraux aux bords de bande vers la lame d'air.

## Revendications

1. Système d'essorage d'un revêtement de métal liquide sur une bande métallique (1) en défilement vertical (Z) comprenant :
- au moins deux lames d'air (5) exerçant respectivement sous forme de flux de gaz un profil de pression sur une largeur de chacune des faces de ladite bande,
- un moyen de mesure acoustique (9) dédié à enregistrer des ondes provenant du système d'essorage,
- un moyen d'analyse acoustique (10) couplé au moyen de mesure acoustique,
**caractérisé en ce que** :
le moyen d'analyse acoustique est configuré pour discerner au moins une signature acoustique provenant d'une irrégularité fonctionnelle du système d'essorage liée à au moins un élément obstructeur altérant le flux en section de sortie de lame d'air.

2. Système selon revendication 1, pour lequel l'élément obstructeur comprend au moins un des éléments suivants :
une pollution poussiéreuse, une éclaboussure de métal liquide, un composé d'impureté solide tel que de type dross, un outil de nettoyage de la section de sortie de lame d'air, une pollution dans une alimentation de soufflage de la lame d'air.

3. Système selon revendications 1 ou 2, pour lequel :
- des déflecteurs d'air (6) sont disposés de part et d'autre de chaque bord de bande sous un écart latéral, idéalement ajustable entre 0.1mm et 50mm,
- le moyen d'analyse acoustique est configuré pour discerner une signature acoustique provenant d'une irrégularité fonctionnelle du système d'essorage liée à un dépassement d'un seuil prédéfini du dit écart.

4. Système selon une des revendications 1 à 3, pour lequel le moyen d'analyse acoustique est configuré pour discerner une signature acoustique de l'irrégularité fonctionnelle du système d'essorage liée à une modification de flux de gaz par rapport à une signature acoustique de référence liée à une géométrie d'ouverture de sortie de lame d'air à section variable transversalement et/ou verticalement, particulièrement sous forme d'au moins une lèvre à ouverture verticale variable selon la largeur de la lame d'air.

5. Système selon revendications 4, pour lequel la géométrie d'ouverture, à section variable transversalement et/ou verticalement, est modifiée sous un mode actif de défilement continu de bande.

6. Système selon une des revendications 1 à 5, pour lequel le moyen d'analyse acoustique est configuré pour discerner une signature acoustique de l'irrégularité fonctionnelle du système d'essorage liée à au moins une des causes suivantes :
- une résonance vibratoire parasite de la bande ou d'un déflecteur d'air latéral à la bande,
- un défaut qualitatif intrinsèque de bande ou de son revêtement, en particulier un défaut périodique,
- une forme de bande ayant au moins une portion transversale oblique, concave ou convexe,
- un décentrage transversal de la bande entre les deux lames d'air,
- un dépassement d'un seuil prédéfini de bruit de fond du système d'essorage,
- un désalignement vertical des ouvertures en section de sortie des deux lames d'air,
- un défaut de moyen de soufflage dans les lames d'air,
- une insuffisance de déflection d'air en bord de bande.

7. Système selon une des revendications 1 à 6, pour lequel le moyen de mesure se compose d'au moins un capteur de pression acoustique situé d'une part ou d'autre des bords de bande.

8. Système selon une des revendications 1 à 7, pour lequel le moyen de mesure se compose de plusieurs capteurs de pression acoustique disposés parallèlement à la lame d'air, idéalement au moins au nombre de 2, 3 ou 4.

9. Système selon une des revendications 1 à 8, pour lequel le moyen d'analyse acoustique est configuré pour délivrer au moins une alarme à une unité de contrôle ou un opérateur (11, 13), en particulier sous forme d'alarme pour déclencher une action de nettoyage de la section de sortie de lame d'air, idéalement par un outil manuel ou automatisé et idéalement lors d'un passage d'une queue et d'une tête de deux bandes soudées.

10. Système selon la revendication précédente, pour lequel l'unité de contrôle est couplée à au moins un module de régulation (12), chacun des dits modules de régulation étant couplés à des équipements agissant en particulier sur les lames d'air (5) et/ou des déflecteurs latéraux (6) à la bande, et en particulier agissant sur des dispositifs disposés en aval ou en amont du système d'essorage tels qu'un stabilisateur de bande (7), des moyens de refroidissement (8) ou des moyens d'entrainement de bande (3, 4).

11. Système selon la revendication précédente, pour lequel chaque module de régulation du profil de pression comprend une fenêtre de paramètres autorisés de fonctionnement du système d'essorage, les dits paramètres étant adaptés au format, au type et/ou à une vitesse de défilement de bande et de revêtement et aux équipements régulés du dit système d'essorage.

12. Système selon la revendication précédente, pour lequel en cas de fonctionnement du système d'essorage hors d'une fenêtre de paramètres autorisés de fonctionnement, une alarme d'alerte pour une action (manuelle ou automatique) de maintenance est déclenchée.

13. Système selon une des revendications précédentes 10 à 12, pour lequel les paramètres de fonctionnement du système d'essorage sont la pression du flux de gaz, la distance entre lame d'air et bande, l'inclinaison du flux de gaz par rapport à l'horizontale, la hauteur du système d'essorage par rapport à un bain de métal liquide sous-jacent, un dimensionnement de la section d'ouverture en sortie des lames d'air.

14. Système selon une des revendications précédentes, pour lequel le moyen d'analyse acoustique est couplée à une unité d'apprentissage automatique, tel qu'un réseau neuronal.

## Patentansprüche

1. Trocknungssystem einer Flüssigmetallbeschichtung auf einem vertikal (Z) laufenden Metallband (1), umfassend:
- mindestens zwei Luftmesser (5), die jeweils in Form eines Gasstroms ein Druckprofil über eine Breite jeder der Seiten des Bandes ausüben,
- ein akustisches Messmittel (9), das für das Aufzeichnen von Wellen bestimmt ist, die aus dem Trocknungssystem stammen,
- ein akustisches Analysemittel (10), das mit dem akustischen Messmittel gekoppelt ist,
**dadurch gekennzeichnet, dass**:
das akustische Analysemittel so konfiguriert ist, dass es mindestens eine akustische Signatur erkennt, die aus einer funktionellen Unregelmäßigkeit des Trocknungssystems stammt, die sich aus mindestens einem behindernden Element ergibt, das den Fluss im Austrittsabschnitt des Luftmessers beeinträchtigt.

2. System nach Anspruch 1, wobei das behindernde Element mindestens eines der folgenden Elemente umfasst: eine staubige Verschmutzung, Flüssigmetallspritzer, eine feste Verunreinigungsverbindung wie z. B. vom Typ Dross, ein Reinigungswerkzeug für den Austrittsabschnitt des Luftmessers, eine Verschmutzung in einer Luftmesser-Blasluftversorgung.

3. System nach Anspruch 1 oder 2, bei dem:
- Luftleitbleche (6) auf beiden Seiten jeder Bandkante mit einem seitlichen Abstand angeordnet sind, der idealerweise zwischen 0,1 mm und 50 mm einstellbar ist,
- das akustische Analysemittel so konfiguriert ist, dass es eine akustische Signatur erkennt, die aus einer funktionellen Unregelmäßigkeit des Trocknungssystems stammt, die sich aus einer Überschreitung eines vordefinierten Schwellenwerts des Abstands ergibt.

4. System nach einem der Ansprüche 1 bis 3, bei dem das akustische Analysemittel so konfiguriert ist, dass es eine akustische Signatur der funktionellen Unregelmäßigkeit des Trocknungssystems erkennt, die sich aus einer Änderung des Gasflusses im Vergleich zu einer akustischen Referenzsignatur ergibt, die sich aus einer Geometrie der Austrittsöffnung des Luftmessers mit quer und/oder vertikal variablem Abschnitt ergibt, insbesondere in Form von mindestens einer Lippe mit vertikaler Öffnung, die je nach Breite des Luftmessers variabel ist.

5. System nach Anspruch 4, bei dem die Öffnungsgeometrie mit quer und/oder vertikal variablem Abschnitt unter einem aktiven Modus des kontinuierlichen Bandlaufs verändert wird.

6. System nach einem der Ansprüche 1 bis 5, bei dem das akustische Analysemittel so konfiguriert ist, dass es eine akustische Signatur der funktionellen Unregelmäßigkeit des Trocknungssystems erkennt, die sich aus mindestens einer der folgenden Ursachen ergibt:
- einer parasitären Schwingungsresonanz des Bandes oder eines Luftleitblechs seitlich des Bandes,
- einem qualitativen intrinsischen Fehler des Bandes oder seiner Beschichtung, insbesondere einem periodischen Fehler,
- einer Form des Bandes, aufweisend mindestens einen schrägen, konkaven oder konvexen Querbereich,
- einer Querdezentrierung des Bandes zwischen den beiden Luftmessern,
- einer Überschreitung eines vordefinierten Schwellenwerts für das Hintergrundrauschen des Trocknungssystems,
- einer vertikalen Fehlausrichtung der Öffnungen im Austrittsabschnitt der beiden Luftmesser,
- einem Defekt des Mittels zum Einblasen in die Luftmesser,
- einer unzureichenden Luftleitung an der Bandkante.

7. System nach einem der Ansprüche 1 bis 6, bei dem das Messmittel aus mindestens einem Schalldrucksensor besteht, der sich auf beiden Seiten der Bandkanten befindet.

8. System nach einem der Ansprüche 1 bis 7, bei dem das Messmittel aus mehreren, idealerweise mindestens 2, 3 oder 4 parallel zum Luftmesser angeordneten Schalldrucksensoren besteht.

9. System nach einem der Ansprüche 1 bis 8, bei dem das akustische Analysemittel so konfiguriert ist, dass es mindestens einen Alarm an eine Steuereinheit oder einen Bediener (11, 13) ausgibt, insbesondere in Form eines Alarms, um eine Reinigungsaktion des Austrittsabschnitts des Luftmessers auszulösen, idealerweise durch ein manuelles oder automatisiertes Werkzeug und idealerweise bei einem Durchgang eines Endes und eines Anfangs von zwei verschweißten Bändern.

10. System nach dem vorhergehenden Anspruch, bei dem die Steuereinheit mit mindestens einem Regelmodul (12) gekoppelt ist, wobei jedes der Regelmodule mit Einrichtungen gekoppelt ist, die insbesondere auf die Luftmesser (5) und/oder die seitlichen Leitbleche (6) an dem Band wirken und insbesondere auf Einrichtungen wirken, die dem Trocknungssystem vorgelagert oder nachgelagert angeordnet sind, wie z. B. ein Bandstabilisator (7), Kühlmittel (8) oder Bandantriebsmittel (3, 4).

11. System nach dem vorhergehenden Anspruch, bei dem jedes Regelmodul des Druckprofils ein Fenster mit zulässigen Parametern für den Betrieb des Trocknungssystems umfasst, wobei die genannten Parameter an das Format, den Typ und/oder eine Geschwindigkeit des Band- und Beschichtungslaufs und an die geregelten Einrichtungen des Trocknungssystems angepasst sind.

12. System nach dem vorhergehenden Anspruch, bei dem im Falle eines Betriebs des Trocknungssystems außerhalb eines Fensters zulässiger Betriebsparameter ein Warnalarm für eine (manuelle oder automatische) Wartungsmaßnahme ausgelöst wird.

13. System nach einem der vorhergehenden Ansprüche 10 bis 12, bei dem die Betriebsparameter des Trocknungssystems der Druck des Gasstroms, der Abstand zwischen dem Luftmesser und dem Band, die Neigung des Gasstroms zur Horizontalen, die Höhe des Trocknungssystems in Bezug auf ein darunter liegendes Flüssigmetallbad, eine Dimensionierung des Öffnungsabschnitts am Austritt der Luftmesser sind.

14. System nach einem der vorhergehenden Ansprüche, bei dem das akustische Analysemittel mit einer Einheit für maschinelles Lernen, wie einem neuronalen Netz, gekoppelt ist.

## Claims

1. Liquid-removal system for a liquid metal coating on a metal strip (1) running vertically (Z), comprising:
- at least two air knives (5) respectively exerting a pressure profile in the form of a gas flow over a width of each of the faces of said strip,
- an acoustic measurement means (9) dedicated to recording waves originating from the liquid-removal system,
- an acoustic analysis means (10) coupled to the acoustic measurement means,
**characterized in that**:
the acoustic analysis means is configured to discern at least one acoustic signature originating from an operational irregularity of the liquid-removal system related to at least one obstructive element altering the flow at the outlet cross section of the air knife.

2. System according to Claim 1, wherein the obstructive element comprises at least one of the following elements:
dust pollution, liquid metal splash, a solid impurity compound such as of the dross type, a cleaning tool for the outlet cross section of the air knife, pollution in a blowing supply of the air knife.

3. System according to Claim 1 or 2, wherein:
- air deflectors (6) are disposed on either side of each strip edge at a lateral spacing, ideally adjustable between 0.1 mm and 50 mm,
- the acoustic analysis means is configured to discern an acoustic signature originating from an operational irregularity of the liquid-removal system related to exceedance of a predefined threshold for said spacing.

4. System according to one of Claims 1 to 3, wherein the acoustic analysis means is configured to discern an acoustic signature of the functional irregularity of the liquid-removal system related to a modification of the gas flow with respect to a reference acoustic signature related to an air knife outlet opening geometry with a transversely and/or vertically variable cross section, particularly in the form of at least one lip with a vertical opening that is variable according to the width of the air knife.

5. System according to Claim 4, wherein the opening geometry, with a transversely and/or vertically variable cross section, is modified under an active mode for continuous strip running.

6. System according to one of Claims 1 to 5, wherein the acoustic analysis means is configured to discern an acoustic signature of the functional irregularity of the liquid-removal system related to at least one of the following causes:
- a parasitic vibratory resonance of the strip or of an air deflector lateral to the strip,
- an intrinsic qualitative defect in the strip or its coating, in particular a periodic defect,
- a strip shape having at least one oblique, concave or convex transverse portion,
- transverse decentring of the strip between the two air knives,
- exceedance of a predefined background noise threshold for the liquid-removal system,
- vertical misalignment of the openings at the outlet cross section of the two air knives,
- a defect in the blowing means in the air knives,
- insufficient air deflection at the strip edge.

7. System according to one of Claims 1 to 6, wherein the measurement means consists of at least one acoustic pressure sensor situated on one side or the other of the strip edges.

8. System according to one of Claims 1 to 7, wherein the measurement means consists of a plurality of acoustic pressure sensors, ideally at least 2, 3 or 4, disposed parallel to the air knife.

9. System according to one of Claims 1 to 8, wherein the acoustic analysis means is configured to deliver at least one alarm to a control unit or an operator (11, 13), in particular in the form of an alarm for triggering a cleaning action for the outlet cross section of the air knife, ideally by a manual or automated tool and ideally as a tail and a head of two welded strips pass through.

10. System according to the preceding claim, wherein the control unit is coupled to at least one regulation module (12), each of said regulation modules being coupled to equipment acting in particular on the air knives (5) and/or deflectors (6) lateral to the strip, and in particular acting on devices disposed downstream or upstream of the liquid-removal system such as a strip stabilizer (7), cooling means (8) or strip driving means (3, 4).

11. System according to the preceding claim, wherein each module for regulating the pressure profile comprises a window of permissible operating parameters for the liquid-removal system, said parameters being adapted to the format, to the type and/or to a strip running speed and coating speed and to the regulated equipment of said liquid-removal system.

12. System according to the preceding claim, wherein, in the case of the liquid-removal system operating outside a window of permissible operating parameters, a warning alarm for a (manual or automatic) maintenance action is triggered.

13. System according to one of the preceding Claims 10 to 12, wherein the operating parameters for the liquid-removal system are the pressure of the gas flow, the distance between the air knife and the strip, the inclination of the gas flow with respect to the horizontal, the height of the liquid-removal system with respect to an underlying liquid metal bath, a dimensioning of the opening cross section at the outlet of the air knives.

14. System according to one of the preceding claims, wherein the acoustic analysis means is coupled to a machine learning unit, such as a neural network.
